# EUROPEAN PATENT APPLICATION

(11) **EP 3 244 245 A1**
(43) Date of publication of application: **15.11.2017**
(21) Application number: 16734905.9
(22) Date of filing: 05.01.2016
(51) Int. Cl.: G02B 6/44

(54) **OPTICAL CABLE FANOUT DEVICE**

(30) Priority: 07.01.2015 CN 201520009100 U
(71) Applicant: ADC Telecommunications (Shanghai) Distribution Co., Ltd., Shanghai 200131 (CN)
(72) Inventor: WANG, Zhengbin, Shanghai 200131 (CN); CAI, Zhaohui, Shanghai 200131 (CN); LIU, Yan, Shanghai 200131 (CN); XU, Dong, Shanghai 200131 (CN)
(74) Representative: Murgitroyd & Company
(86) International application number: PCT/CN2016/070143
(87) International publication number: WO 2016/110245

(57) **Abstract**

The present invention discloses an optical cable fan-out device, used for dividing a single main optical cable into a plurality of branch optical cables. Wherein said optical cable fan-out device comprises of housing, said housing possessing a first end, and a second end opposite said first end. Said main optical cable is introduced into said housing via said first end, and said plurality of branch optical cables are led out from said second end of said housing. Wherein, a branch cable protective component is provided on the second end of said housing, said branch cable protective component possessing a trumpet shaped opening that widens gradually outwards, said plurality of branch optical cables being led out to the exterior of said housing via said trumpet shaped opening. In the present invention, when the branch optical cables are subjected to a lateral tension, the branch optical cables come into contact with the arc-shaped inner surface of the trumpet shaped opening and are uniformly stressed and smoothly bent along the arc-shaped inner surface, without excessive bending occurring; the outcome of this is that, it is possible to effectively prevent damage to the branch optical cables due to lateral tension, without increasing the cost of the optical cable fan-out device.

## Description

The present application asserts a claim on the rights claimed in Chinese patent application 201520009100.0 submitted to the State Intellectual Property Office of the People's Republic of China on 7 January 2015, the full content disclosed in that application being incorporated in quoted form in this document.

### Technical field

The present invention relates to an optical cable fan-out device used for dividing a single main optical cable into a plurality of branch optical cables.

### Prior art

According to the prior art, when it is necessary to split a single multi-core main optical cable into a plurality of branch optical cables, an optical cable fan-out device or optical cable splitter is required. The main optical cable is introduced into the optical cable fan-out device from one end, and a plurality of branch optical cables led out from the other end of the optical cable fan-out device.

However, in the prior art, when branch optical cables are subjected to lateral tension (tension in a coaxially perpendicular direction to the branch optical cables), the branch optical cables become bent, causing damage to them, affecting the transmission of the optical signal, and in severe cases, results in interruption of the optical signal.

In order to overcome the aforementioned problems, in the prior art, it is standard to sheath the branch optical cables leading out of one end of the optical cable fan-out device with a rubber tail sleeve (otherwise known as a strain boot), the branch optical cables passing through said rubber tail sleeves. In this manner, when the branch optical cables were subjected to lateral tension, the rubber tail sleeve has the effect of buffering the lateral tension exerted on the branch optical cables, ensuring that they are not bent excessively, thus providing excellent protection of the branch optical cables. Although the rubber tail sleeve is capable of protecting the branch optical cables, increasing the stability of the optical signal, it also results in increased costs.

### Scope of the invention

The aim of the present invention is to resolve at least one aspect of the above-mentioned problems and drawbacks encountered with the prior art.

One aim of the present invention is to provide an optical cable fan-out device which prevents damage due to lateral tension on the branch optical cables without increasing costs.

According to one aspect of the present invention, an optical cable fan-out device is provided for the purpose of dividing a single main optical cable into a plurality of branch optical cables. Said optical cable fan-out device comprises a housing, said housing possessing a first end, and a second end opposite said first end. Said main optical cable is introduced into said housing via said first end, and said plurality of branch optical cables are led out from said second end of said housing. Wherein, a branch cable protective component is provided on the second end of said housing, said branch cable protective component possessing a trumpet shaped opening that widens gradually outwards, said plurality of branch optical cables being led out to the exterior of said housing via said trumpet shaped opening.

According to one illustrative embodiment of the present invention, said trumpet shaped opening possesses a smooth arc-shaped inner surface, the radius of curvature of the arc-shaped inner surface being greater than the smallest possible radius of curvature of said branch optical cable.

According to another illustrative embodiment of the present invention, when lateral tension occurs, the branch optical cable comes into contact with the arc-shaped inner surface of said trumpet shaped opening, and curves around said arc-shaped inner surface.

According to another illustrative embodiment of the present invention, said branch cable protective component is combined as a single unit with said housing.

According to another illustrative embodiment of the present invention, said branch cable protective component is an independent component installed on said housing.

According to another illustrative embodiment of the present invention, said optical cable fan-out device further comprises a retainer, the ends of said plurality of branch optical cables being secured at one end within said retainer; in addition, a recessed slot is formed on the inner wall of said housing, said retainer catching in said recessed slot, resulting in said plurality of branch optical cables being secured to said housing.

According to another illustrative embodiment of the present invention, an outwardly protruding raised section is formed on the first end of said housing; and said optical cable fan-out device also comprises of a heat shrink tubing heat shrunk onto said raised section and one end of said main optical cable, thus securing said main optical cable to said housing.

According to another illustrative embodiment of the present invention, said housing comprises a first half housing and a second half housing, said first half housing and second half housing being structured in such a manner that they may be assembled together, thus forming a complete housing.

According to another illustrative embodiment of the present invention, said branch cable protective component comprises a first half module formed on said first half housing and a second half module formed on said second half housing, said first half module and said second half module being structured in such a manner that they may be assembled together, thus forming the complete branch cable protective component.

According to another illustrative embodiment of the present invention, first flexible catches are respectively formed on two sides of one of the half modules out of said first half module and said second half module; first catch slots corresponding to said first flexible catches are respectively formed on two sides of the other half module of said first half module and said second half module; when said first half module and said second half module are assembled together, said first flexible catches clip into said first catch slots, allowing said first half module and said second half module to be locked together.

According to another illustrative embodiment of the present invention, second flexible catches are respectively formed on two sides of one of the half housings out of said first half housing and said second half housing; second catch slots corresponding to said second flexible catches are respectively formed on the two side walls of the other half housing of said first half housing and said second half housing; when said first half housing and said second half housing are assembled together, said second flexible catches clip into said second catch slots, allowing said first half housing and said second half housing to be locked together.

According to another illustrative embodiment of the present invention, insertion holes are formed on the other half housing, each of said insertion holes extending from the top surface of the side walls of said other half housing to the corresponding second catch slot; each said second flexible catch passes through a corresponding insertion hole and clips into a corresponding second catch slot.

In each of the embodiments of the present invention, a branch cable protective component forms part of the optical cable fan-out device, said branch cable protective component possessing a trumpet shaped opening that widens gradually outwards, said plurality of branch optical cables being led out to the exterior of said optical cable fan-out device housing via said trumpet shaped opening. In this manner, when subjected to lateral tension, the branch optical cables come into contact with the arc-shaped inner surface of the trumpet shaped opening and are uniformly stressed and smoothly bent along the arc-shaped inner surface, without excessive bending occurring; the outcome of this is that, it is possible to effectively prevent damage to the branch optical cables due to lateral tension, without increasing the cost of the optical cable fan-out device, due to there being no need to supply an additional strain relief boot.

Furthermore, in the various embodiments of the present invention, the optical cable fan-out device has a simple structure and is easily manufactured.

The descriptions of the present invention in the following text taken in conjunction with the appended diagrams clarify the various aims and advantages of the invention, and are of assistance in gaining a full understanding of the present invention.

### Description of the drawings

Figure 1 is a three-dimensional graphical representation of an illustrative embodiment of the optical cable fan-out device according to the present invention; and
Figure 2 is a segmented graphical representation of the optical cable fan-out device shown in figure 1.

### Embodiments

The following implementations, taken in conjunction with the appended diagrams, provide a more detailed description of the technical schemes of the present invention. Within the Description, numbering that is the same or similar occurring in the appended diagrams refers to components that are the same or similar. The aim of the following description of the modes of implementation of the present invention taken in conjunction with the appended diagrams are to aid in interpretation of the overall conceptual framework of the present invention, and should not be understood as restricting the invention in any way.

Furthermore, in the following detailed descriptions, for convenience of interpretation, many specific details are provided in order to allow a full understanding of the implementations disclosed. It should be clear that, one or more implementations would be possible without these specific details. In all other cases, structures and apparatus which are common knowledge are represented graphically to allow simplification of the appended diagrams.

According to the overall technical concepts of the present invention, provided is an optical cable fan-out device used for dividing a single main optical cable into a plurality of branch optical cables. Said optical cable fan-out device comprises a housing, said housing possessing a first end, and a second end opposite said first end. Said main optical cable is introduced into said housing via said first end, and said plurality of branch optical cables are led out from said second end of said housing. Wherein, a branch cable protective component is provided on the second end of said housing, said branch cable protective component possessing a trumpet shaped opening that widens gradually outwards, said plurality of branch optical cables being led out to the exterior of said housing via said trumpet shaped opening.

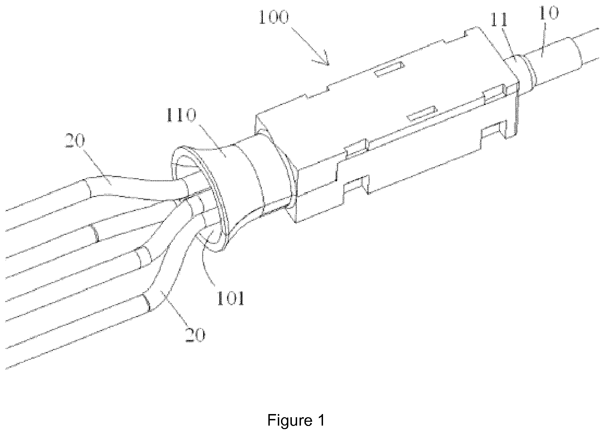

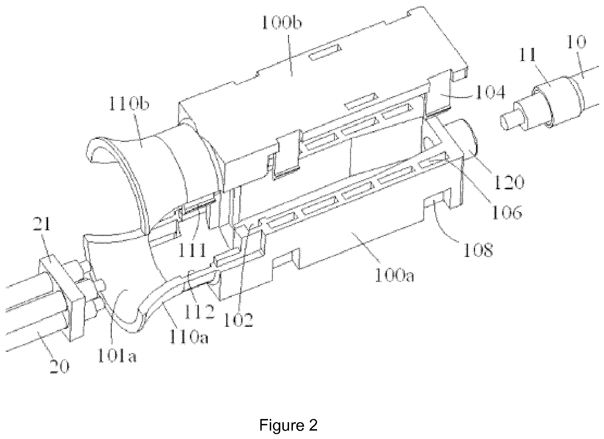

Figure 1 is a three-dimensional graphical representation of an illustrative embodiment of an optical cable fan-out device according to the present invention; and figure 2 is a segmented graphical representation of the optical cable fan-out device shown in figure 1.

According to an embodiment of the present invention, an optical cable fan-out device is provided, as shown in figure 1 and figure 2, said optical cable fan-out device being used to divide a single main optical cable 10 into a plurality of branch optical cables 20.

In the embodiment graphically represented in figure 1, said optical cable fan-out device 100 comprises a housing 100, said housing 100 possessing a first end (the right end in figure 1) and a second end opposite the first end (the left end in figure 1). The main optical cable 10 is introduced from the first end of the housing 100, and said plurality of branch optical cables 20 are led out from the second end of the housing 100.

According to one illustrative embodiment of the present invention, as shown in figure 1, a branch cable protective component 110 is provided on the second end of the housing 100, said branch cable protective component 110 possessing a trumpet shaped opening 101 that widens gradually outwards, the plurality of branch optical cables 20 being led out to the exterior of the housing 100 via the trumpet shaped opening 101.

As shown in figure 2, in the embodiment depicted, the trumpet shaped opening 101 possesses a smooth arc-shaped inner surface 101a, the radius of curvature of the arc-shaped inner surface 101a being greater than the smallest possible radius of curvature of the branch optical cable 20.

In this manner, when the branch optical cables 20 are subjected to lateral tension, the branch optical cables 20 come into contact with the arc-shaped inner surface 101a of the trumpet shaped opening 101, and are uniformly stressed and smoothly bent along the arc-shaped internal surface 101a, without excessive bending occurring, thus effectively preventing damage to the branch optical cables 20 due to lateral tension.

According to one illustrative embodiment of the present invention, as shown in figure 1, the branch cable protective component 110 is combined as a single unit with said housing 100. For instance, the branch cable protective component 110 and the housing 100 may be produced as a single moulding, thus reducing costs.

According to one illustrative embodiment of the present invention, the branch cable protective component 110 is an independent component installed on said housing 100.

As shown in figure 2, in one illustrative embodiment of the present invention, the optical cable fan-out device further comprises a retainer 21, the ends of the plurality of branch optical cables 20 being secured at one end within the retainer 21.

With further reference to figure 2, a recessed slot 102 is formed on the inner wall of the housing 100, the retainer 21 catching in said recessed slot 102, resulting in the plurality of branch optical cables 20 being secured to said housing 100.

According to an embodiment of the present invention, as is shown in figure 1 and figure 2, an outwardly protruding raised section 120 is formed on the first end of said housing 100; the optical cable fan-out device further comprises of a heat shrink tubing 11, said heat shrink tubing 11 being heat shrunk onto the raised section 120 and one end of the optical cable 10, thus securing the main optical cable 10 to the housing 100.

As shown in figure 2, in one illustrative embodiment of the present invention, the housing 100 comprises a first half housing 100a and a second half housing 100b, the first half housing 100a and second half housing 100b being structured in such a manner that they may be assembled together, thus forming the complete housing.

In the embodiment depicted in figure 2, the branch cable protective component 110 comprises a first half module 110a formed on the first half housing 100a, and a second half module 100b formed on the second half housing 100b, wherein the first half module 110a and the second half module 110b are structured in such a manner that they may be assembled together, thus forming the complete branch cable protective component 110.

As is clearly illustrated in figure 2, in one illustrative embodiment of the present invention, first flexible catches 111 are respectively formed on two sides of one of the half modules 110b out of the first half module 110a and the second half module 110b; there are also first catch slots 112 corresponding to the first flexible catches 111 which are respectively formed on two sides of the other half module 110a of the first half module 110a and the second half module 110b. In this manner, when the first half module 110a and the second half module 110b are assembled together, the first flexible catches 111 clip into the first catch slots 112, allowing the first half module 110a and the second half module 110b to be locked together.

As shown in figure 2, in one illustrative embodiment of the present invention, second flexible catches 104 are respectively formed on two sides of one of the half housings 100b out of the first half housing 100a and the second half housing 100b; second catch slots 108 corresponding to the second flexible catches 104 being respectively formed on two side walls of the other half housing 100a of the first half housing 100a and the second half housing 100b. When the first half housing 100a and the second half housing 100b are assembled together, the second flexible catches 104 clip into the second catch slots 108, allowing the first half housing 100a and the second half housing 100b to be locked together.

Continuing to refer to figure 2, in the embodiment depicted in the diagram, insertion holes 106 are formed on the other half housing 100a out of the first half housing 100a and the second half housing 100b, each of the insertion holes 106 extending from the top surface of the side wall of the other half housing 100a to the corresponding second catch slot 108. Each second flexible catch 104 passes through a corresponding insertion hole 106 and clips into a corresponding second catch slot 108. Due to the flexible arm sections of the second flexible catches 104 being enclosed within the insertion holes 106, it is possible to prevent unexpected external strains on the flexible arms of the second flexible catches 104 causing the second flexible catches 104 to separate from the second catch slots 108.

As would be appreciated by a person skilled in the art, the embodiments mentioned above merely serve as examples, and a person skilled in the art would be able to carry out improvements to these embodiments, whereby, as long as these do not conflict with the structures or principles described in these embodiments, they may be freely assembled.

Regardless of the fact that the present invention has been described in conjunction with the appended diagrams, the aim of the embodiments to which the appended diagrams relate is purely to provide illustrative descriptions of preferred implementations of the present invention, and should not be understood as constituting any kind of restriction on the invention.

Regardless of the fact certain embodiments that represent the overall concepts of the present invention have been displayed and described, a person of ordinary skill in the art would be able to make various modifications to these embodiments which do not depart from the principles and spirit embodied by the concepts of the present invention, the scope of the invention being defined by the claims and their equivalents.

It should be understood that, the wording "including" does not exclude other components or steps. Furthermore, the labelling of any component in the claims should not be understood as restricting the scope of the present invention in any way.

## Claims

1. An optical cable fan-out device, used for dividing a single main optical cable (10) into a plurality of branch optical cables (20), said optical cable fan-out device comprising a housing (100), said housing (100) possessing a first end, and a second end opposite said first end,
said main optical cable (10) being introduced into said housing (100) via said first end, and said plurality of branch optical cables (20) being led out from said second end of said housing (100), wherein
a branch cable protective component (110) is provided on the second end of the housing (100), said branch cable protective component (110) possessing a trumpet shaped opening (101) that widens gradually outwards, said plurality of branch optical cables (20) being led out to the exterior of said housing (100) via said trumpet shaped opening (101).

2. The optical cable fan-out device according to claim 1, wherein
said trumpet shaped opening (101) possesses a smooth arc-shaped inner surface (101a), the radius of curvature of the arc-shaped inner surface (101a) being greater than the smallest possible radius of curvature of said branch optical cables (20).

3. The optical cable fan-out device according to claim 2, wherein
when lateral tension occurs, the branch optical cables (20) come into contact with the arc-shaped inner surface (101a) of said trumpet shaped opening (101) and curve around said arc-shaped inner surface (101a).

4. The optical cable fan-out device according to claim 1, wherein said branch cable protective component (110) is combined as a single unit with said housing (100).

5. The optical cable fan-out device according to claim 1, wherein
said branch cable protective component (110) is an independent component assembled on said housing (100).

6. The optical cable fan-out device according to claim 1, wherein
said optical cable fan-out device further comprises a retainer (21), the ends of said plurality of branch optical cables (20) being secured at one end within said retainer (21); and
a recessed slot (102) being formed on the inner wall of said housing (100), said retainer (21) catching in said recessed slot (102), resulting in said plurality of branch optical cables (20) being secured to said housing (100).

7. The optical cable fan-out device according to claim 1, wherein
an outwardly protruding raised section (120) is formed on the first end of said housing (100); and
said optical cable fan-out device further comprises a heat shrink tubing (11), said heat shrink tubing (11) being heat shrunk onto said raised section (120) and one end of said optical cable (10), thus securing said main optical cable (10) to said housing (100).

8. The optical cable fan-out device according to claim 1, wherein
said housing (100) comprises a first half housing (100a) and a second half housing (100b), said first half housing (100a) and second half housing (100b) being structured in such a manner that they may be assembled together, thus forming the complete housing.

9. The optical cable fan-out device according to claim 8, wherein
said branch cable protective component (110) comprises a first half module (110a) formed on said
first half housing (100a), and a second half module (100b) formed on said second half housing (100b), and
said first half module (110a) and said second half module (110b) are structured in such a manner that they may be assembled together, thus forming the complete branch cable protective component (110).

10. The optical cable fan-out device according to claim 9, wherein
first flexible catches (111) are respectively formed on two sides of one of the half modules (110b) out of said first half module (110a) and said second half module (110b);
first catch slots (112) corresponding to said first flexible catches (111) are respectively formed on two sides of the other half module (110a) of said first half module (110a) and said second half module (110b) ; and
when said first half module (110a) and said second half module (110b) are assembled together, said first flexible catches (111) clip into said first catch slots (112), allowing said first half module (110a) and said second half module (110b) to be locked together.

11. The optical cable fan-out device according to claim 10, wherein
second flexible catches (104) are respectively formed on two sides of one of the half housings (100b) out of said first half housing (100a) and said second half housing (100b);
second catch slots (108) corresponding to said second flexible catches (104) are respectively formed on two side walls of the other half housing (100a) of said first half housing (100a) and said
second half housing (100b); and
when said first half housing (100a) and said second half housing (100b) are assembled together, said second flexible catches (104) clip into said second catch slots (108), allowing said first half housing (100a) and said second half housing (100b) to be locked together.

12. The optical cable fan-out device according to claim 11, wherein
insertion holes (106) are formed on the other half housing (100a), each of said insertion holes (106) extending from the top surface of the side walls of said other half housing (100a) to a corresponding second catch slot (108); and
each of said second flexible catches (104) pass through a corresponding insertion hole (106) and clip into a corresponding second catch slot (108).
